# EUROPÄISCHE PATENTANMELDUNG

(11) **EP 2 359 979 A2**
(43) Veröffentlichungstag der Anmeldung: **24.08.2011**
(21) Anmeldenummer: 11150070.8
(22) Anmeldetag: 04.01.2011
(51) Int. Cl.: B23K 26/073, B23K 26/04

(54) **Laserstrahlschweißeinrichtung und Verfahren zum Betreiben einer Laserstrahlschweißeinrichtung**

(30) Priorität: 23.02.2010 DE 102010002253
(71) Anmelder: Robert Bosch GmbH, 70442 Stuttgart (DE)
(72) Erfinder: Birnesser, Andreas Josef, 70499 Weilimdorf (DE); Keller, Thomas, 77815 Buehl (DE)

(57) **Zusammenfassung**

Die Erfindung betrifft eine Laserstrahlschweisseinrichtung (10; 40; 50; 60) zum Verbinden zweier Bauteile (1, 2), mit einer Laserstrahlquelle (11) zur Erzeugung eines Laserstrahls (5), einer Optikeinrichtung (12) zur Formung eines ringförmigen Laserstrahls (14) in einer Fokusierebene (13) und einer Auswerteeinrichtung (25), die zumindest ein optisches Element (27; 41; 52; 61), insbesondere ein Spiegelelement, umfasst, mittels dem die von einer Fügezone (20) der Bauteile (1, 2) reflektierte Strahlung erfasst wird. Erfindungsgemäß ist es vorgesehen, die Auswerteeinrichtung (25) die Position der Fügezone (20) relativ zur Fokusierebene (13) erfasst.

## Beschreibung

### Stand der Technik

Die Erfindung betrifft eine Laserstrahlschweißeinrichtung nach dem Oberbegriff des Anspruchs 1 und ein Verfahren zum Betreiben einer Laserstrahlschweißeinrichtung nach dem Oberbegriff des Anspruchs 8.

Eine derartige Laserstrahlschweißeinrichtung sowie ein derartiges Verfahren zum Betreiben einer Laserstrahlschweißeinrichtung sind bereits aus der DE 10 2007 035 717 A1 bekannt. Mittels der bekannten Laserstrahlschweißeinrichtung lässt sich ein ringförmiger Laserstrahl erzeugen, der in einer Fokusierebene auf eine Fügezone zweier Bauteile einwirkt. Mittels der bekannten Laserstrahlschweißeinrichtung lässt sich die Fügezone der Bauteile gezielt erwärmen, so dass lediglich eine örtlich eng begrenzte, lokale Erwärmung der Bauteile ermöglicht wird, welche nach dem Erstarren der Bauteile zu relativ geringen Verzügen führt. Ferner ist es aus der DE 10 2007 035 717 A1 bekannt, eine zusätzliche Spiegelanordnung vorzusehen, welche die von der Fügezone reflektierte Strahlung erfasst, weiterleitet sowie einer Auswerteeinrichtung zuführt.

Zur Vermeidung von Bauteileverzügen ist es vorteilhaft, dass nur so wenig Energie in die Fügezone der Bauteile eingebracht wird, wie dies zum Aufschmelzen der Bauteile unbedingt erforderlich ist. Daher ist es wesentlich, dass die Bauteile sehr exakt zur Fokusierebene des Laserstrahls ausgerichtet werden.

### Offenbarung der Erfindung

Ausgehend von dem dargestellten Stand der Technik liegt der Erfindung die Aufgabe zugrunde, eine Laserstrahlschweißeinrichtung nach dem Oberbegriff des Anspruchs 1 bzw. ein Verfahren zum Betreiben einer Laserstrahlschweißeinrichtung nach dem Oberbegriff des Anspruchs 8 derart weiterzubilden, dass die Bauteileposition sich auf einfache Art und Weise ermitteln lässt, um daraus Rückschlüsse auf eventuell erforderliche Änderungen der Bauteileposition zu schlie-βen, damit lediglich die unbedingt zum Aufschmelzen der Fügezone benötigte Energie in die Bauteile eingeleitet wird. Diese Aufgabe wird bei einer Laserstrahlschweißeinrichtung mit den Merkmalen des Anspruchs 1 bzw. einem Verfahren zum Betreiben einer Laserstrahlschweißeinrichtung mit den Merkmalen des Anspruchs 8 gelöst. Der Erfindung liegt dabei die Idee zugrunde, die Auswerteeinrichtung dazu zu verwenden, um die Position der Bauteile relativ zur Fokusierebene zu erfassen. Mit anderen Worten gesagt bedeutet dies, dass aus dem Ergebnis der von der Auswerteeinrichtung ermittelten Werte Rückschlüsse auf eine gute bzw. eine zu verbessernde Position der Bauteile relativ zur Fokusierebene des Laserstrahls gezogen werden können. Hierzu wird gemäß dem Verfahren nach dem Anspruch 8 insbesondere die Strahlungsintensität der von der Fügezone reflektierten Strahlung ausgewertet.

Vorteilhafte Weiterbildungen der erfindungsgemäßen Laserstrahlschweißeinrichtung sowie des Verfahrens zum Betreiben der Laserstrahlschweißeinrichtung sind in den jeweiligen Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In einer bevorzugten Ausführungsform der Laserstrahlschweißeinrichtung ist es vorgesehen, dass die Auswerteeinrichtung mit einer Positioniereinrichtung zur Positionierung der Bauteile relativ zur Fokusierebene gekoppelt ist. Mittels dieser Positioniereinrichtung ist es möglich, zum einen infolge einer Bewegung der Bauteile relativ zur Fokusierebene auf die exakte Position der Bauteile zur Fokusierebene zu schließen bzw., nach Erhalt des Ergebnisses, mittels der Positioniereinrichtung die Fügezone der Bauteile bzw. die Bauteile exakt zur Fokusierebene auszurichten.

Hierzu ist es in einer konstruktiv einfachen Ausgestaltung der Erfindung vorgesehen, dass die Positioniereinrichtung zumindest eine Verstelleinrichtung für die Bauteile in Richtung der Längsachse des Laserstrahls aufweist. Eine derartige Positioniereinrichtung ist dann sinnvoll, wenn sichergestellt ist, dass die Fügezone bzw. die Bauteile zur Fokusierebene nicht verkippt sind und, dass die Bauteile korrekt bezüglich einer Ebene senkrecht zur Längsachse der Fokusierebene ausgerichtet sind.

Besonders bevorzugt ist jedoch eine Ausgestaltung der Erfindung, bei der die Positioniereinrichtung zusätzlich eine Verstellung der Bauteile in einer Ebene senkrecht zur Längsachse des Laserstrahls und zum Verkippen der Bauteile ermöglicht. Mittels einer derartigen Positioniereinrichtung ist es auch möglich, Bauteile, die verkippt oder bezüglich einer Ebene parallel zur Fokusierebene falsch angeordnet sind, genau zu positionieren bzw. auszurichten.

Bevorzugt ist weiterhin eine Ausgestaltung der Laserstrahlschweißeinrichtung, bei der die Auswerteeinrichtung wenigstens ein Sensorelement, insbesondere eine Photodiode, aufweist und, dass mittels des wenigstens einen Sensorelements die Intensität der von der Fügezone der Bauteile reflektierten Strahlung erfasst wird. Hierbei erlaubt insbesondere die Verwendung wenigstens einer Photodiode eine relativ einfache Auswertung der reflektierten Strahlung.

Um die reflektierte Strahlung dem wenigstens einen Sensorelement gezielt zuzuführen, ist es in einer weiteren, konstruktiv vorteilhaften Ausgestaltung der Erfindung vorgesehen, dass zusätzlich wenigstens eine Fokusierlinse vorgesehen ist, die die von dem optischen Element reflektierte Strahlung auf das wenigstens eine Sensorelement fokussiert.

Um Verkippungen der Bauteile bzw. der Fügezone in Bezug auf die Fokusierebene des Laserstrahls mit relativ einfachem konstruktiven Aufwand ermitteln zu können, ist es in einer weiteren Ausgestaltung der Erfindung vorgesehen, dass einer Fokusierlinse mehrere Sensorelemente zugeordnet sind, die nebeneinander in einer Ebene parallel zur Fokusierlinsenebene angeordnet sind.

Eine besonders vorteilhafte Ausgestaltung der Erfindung sieht bezüglich ihres Verfahrens vor, dass die Auswerteeinrichtung mit einer Regeleinrichtung gekoppelt ist, die eine Positioniereinrichtung für die Bauteile derart ansteuert, dass die Fügezone der Bauteile in der Fokusierebene des ringförmigen Laserstrahls angeordnet ist. Es findet somit eine selbständige Regelung des Laserstrahlschweißens statt, bei der sichergestellt ist, dass sich die Fügezone stets in der Foksierebene des Laserstrahls befindet.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine erste erfindungsgemäße Laserstrahlschweißeinrichtung zum Verbinden zweier Bauteile in einer vereinfachten Darstellung,
- Fig. 2: ein Diagramm bezüglich der Intensität der von der Fügezone reflektierten Strahlung bei einer örtlichen Veränderung der Bauteileposition in grafischer Darstellung,
- Fig. 3: eine zweite erfindungsgemäße Laserstrahlschweißeinrichtung, bei der insbesondere Verkippungen der Bauteile einfach erfasst werden können in schematischer Ansicht,
- Fig. 4: eine dritte erfindungsgemäße Laserstrahlschweißeinrichtung unter Verwendung eines einzigen Konkavspiegels in schematischer Darstellung und
- Fig. 5: eine vierte erfindungsgemäße Laserstahlschweißeinrichtung mit einer gegenüber den Laserstrahlschweißeinrichtungen gemäß den Fig. 1, 3 und 4 veränderten Position der Sensorelemente.

Gleiche Bauteile bzw. Bauteile mit gleicher Funktion sind in den Figuren mit denselben Bezugszeichen versehen.

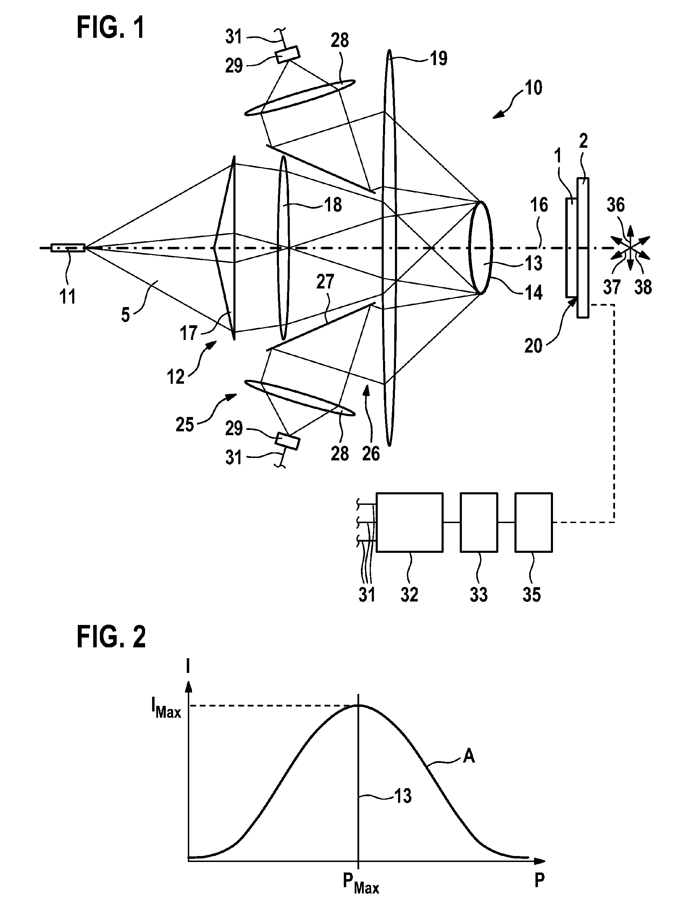

In der Fig. 1 ist eine erste erfindungsgemäße Laserstrahlschweißeinrichtung 10 dargestellt. Die Laserstrahlschweißeinrichtung weist eine Laserstrahlquelle 11 auf, die vorzugsweise einen gepulsten Laserstrahl 5 erzeugt, der mittels einer Optikeinrichtung 12 in einer Fokusierebene 13 in einen ringförmigen Laserstrahl 14 umgewandelt wird.

Die Optikeinrichtung 12 umfasst hierzu ein in Richtung einer Längsachse 16 des Laserstrahls 5 verschiebbar angeordnetes Axikon 17, eine Kollimationslinse 18 sowie eine Fokusierlinse 19. Durch eine Verschiebung der Position des Axikons 17 in Richtung der Längsachse 16 lässt sich hierbei in bekannter Art und Weise der Durchmesser des ringförmigen Laserstrahls 14 beeinflussen, d.h. vergrößern oder verkleinern. In der Fig. 1 sind zwei zu verschweißende Bauteile 1 und 2 dargestellt. Hierbei ist die Position der Bauteile 1 und 2 in der Fig. 1 in Richtung der Längsachse 16 axial beabstandet zu dem Laserstrahl 14 dargestellt. Es wird ausdrücklich darauf hingewiesen, dass dies jedoch lediglich der Einfachheit halber bzw. der besseren Übersichtlichkeit halber in der Fig. 1 so dargestellt ist. Das der Laserstrahlquelle 11 zugewandte erste Bauteil 1 weist insbesondere einen Durchmesser bzw. eine Form in einem Fügebereich 20 mit dem zweiten Bauteil 2 auf, die der Form des Laserstrahls 14 angepasst ist.

Ferner wird ergänzend erwähnt, dass es auch im Rahmen der Erfindung liegt, die Optikeinrichtung 12 derart abzuwandeln, dass zusätzliche optische Elemente vorgesehen sind, die den Laserstrahl 14 radial von außen in den Fügebereich 20 umlenken. Eine derartige Anordnung ist bereits aus der DE 10 2007 035 717 A1 der Anmelderin bekannt, so dass diesbezüglich auf die genannte Veröffentlichung verwiesen wird.

Zur Erzielung optimaler Schweißergebnisse, insbesondere zum Vermeiden von Verzügen der Bauteile 1 und 2 nach dem Erstarren des Fügebereichs 20 ist es erforderlich, dass der Laserstrahl 14 mit seiner Fokusierebene 13 mit der Ebene des Fügebereiches 20 zusammenfällt. Mit anderen Worten gesagt bedeutet dies, dass die Fokusierebene 13 und die Ebene des Fügebereichs 20 identisch sein sollten.

Die Laserstrahlschweißeinrichtung 10 weist ferner eine Auswerteeinrichtung 25 auf. Die Auswerteeinrichtung 25 umfasst eine zusätzliche Optikeinrichtung 26, die einen kegelförmigen Spiegel 27 aufweist. Hierbei ist der Spiegel 27 im Wesentlichen zwischen der Kollimationslinse 18 und der Fokusierlinse 19 konzentrisch zur Längsachse 16 des Laserstrahls 5 angeordnet. Radial außerhalb des Spiegels 27 sind eine Vielzahl von Fokusierlinsen 28 und Sensorelementen 29 in gleichmäßigen Winkelabständen zueinander angeordnet. Hierbei sind die Sensoreinrichtungen 29 bevorzugt als Fotodioden ausgebildet und jeder Fokusierlinse 28 ist eine separate Sensoreinrichtung 29 zugeordnet. Mittels jeder Sensoreinrichtung 29 lässt sich jeweils ein bestimmter, kreisabschnittsförmiger Teilbereich der Fügezone 20 erfassen, indem die von der Fügezone 20 reflektierte Strahlung über die Fokusierlinse 19 auf den Spiegel 27 trifft und von dort über die Fokusierlinse 28 auf die betreffende Sensoreinrichtung 29 geleitet wird.

Die Sensoreinrichtungen 29 sind über Leitungen 31 mit einer Auswerteeinheit 32 verbunden. In der Auswerteeinheit 32 werden die Signale der Sensoreinrichtungen 29 als Eingangssignale verarbeitet und mittels eines in einem Rechenprogramm abgelegten Algorithmuses, der nachfolgend noch näher beschrieben wird, oder eines Datenbankprogramms, ausgewertet. Die Auswerteeinrichtung 32 ist mit einer Regeleinrichtung 33 gekoppelt, die gegebenenfalls auch Bestandteil der Auswerteeinrichtung 32 sein kann, d.h. dass die Auswerteeinheit 32 und die Regeleinrichtung 33 auch eine gemeinsame Baueinheit darstellen können. Die Regeleinrichtung 33 ist wiederum mit einer Positioniereinrichtung 35 gekoppelt. Die Positioniereinrichtung 35, die von der Regeleinrichtung 33 angesteuert wird, ist über z.B. nicht dargestellte Stellantriebe mit den Bauteilen 1 und 2 gekoppelt. Hierbei kann mittels der Positioniereinrichtung 35 die Position der Bauteile 1 und 2 in Richtung der Längsachse 16 und quer zur Längsachse 16 entsprechend der Doppelpfeile 36 und 37 verändert bzw. eingestellt werden. Ferner ist es möglich, mittels der Positioniereinrichtung 35 die Bauteile 1 und 2 in Bezug zu der Fokusierebene 13 zu verkippen, was durch den Doppelpfeil 38 dargestellt sein soll.

Bezüglich der grundsätzlichen Funktion der Laserstrahlschweißeinrichtung 10 bzw. deren Auswerteeinrichtung 32 wird nachfolgend auf die Fig. 2 verwiesen, bei der das Signal einer einzelnen Sensoreinrichtung 29 bei einer Veränderung der Position P der Bauteile 1 und 2 in Richtung der Längsachse 16 dargestellt ist. Hierbei wird mittels der Sensoreinrichtung 29 die Intensität I der von dem Fügebereich 20 auf den Spiegel 27 zurückreflektierten Strahlung erfasst bzw. gemessen. So erkennt man anhand des Kurvenverlaufs A, dass sich bei einer Bewegung der Bauteile 1 und 2 entlang der Längsachse 16, was gleichbedeutend mit einer Verschiebung des Fügebereichs 20 in Richtung der Längsachse 16 ist, die Intensität zunächst zunimmt bis zu einem Maximum, um von dort aus wieder abzunehmen. Wesentlich ist hierbei, dass das Maximum I_{Max} der Intensität I dann einstellt, wenn der Fügebereich 20 in einer Position P_{Max} exakt mit der Fokusierebene 13 zusammenfällt.

Wenn der Verbund aus den beiden Bauteilen 1 und 2 mit der Längsachse 16 genau ausgerichtet ist, wobei die Bauteile 1 und 2 bzw. der Fügebereich 20 der Bauteile 1 und 2 mit der Ebene der Fokusierebene 13 fluchtet, d.h. die Bauteile 1 und 2 zur Fokusierebene 13 nicht verkippt sind, würde es theoretisch genügen, ein einziges Sensorelement 29 zu verwenden, um somit den exakten Abstand der Fügezone 20 in Bezug auf die Fokusierebene 13 zu ermitteln.

Um insbesondere Verkippungen der Bauteile 1 und 2 bzw. des Fügebereichs 20 zur Fokusierebene 13 detektieren zu können, ist es jedoch bevorzugt vorgesehen, eine Vielzahl von Sensoreinrichtungen 29 zu verwenden. Hierbei liegt der Gedanke zugrunde, dass bei der Erfassung eines Maximums I_{Max} an einem bestimmten Sensorelement 29 bei einer verkippten Anordnung der Bauteile 1 und 2 im selben Augenblick das um 180° zu dem bestimmten Sensorelement 29 angeordneten anderen Sensorelement 29 ein Minimum bezüglich der Intensität I aufweist. Aus dem Verfahrweg der Bauteile 1 und 2 in Richtung der Längsachse 16, bis sich an dem anderen Sensorelement 29 ein Maximum bezüglich der Intensität I einstellt, lässt sich somit auf dem Grad der Verkippung bzw. der Schrägstellung der Fügezone 20 der Bauteile 1 und 2 zur Fokusierebene 13 schließen. Die mittels der Auswerteeinheit 32 ermittelten Werte dienen anschließend als Eingangsgrößen für die Regeleinrichtung 33 zur Optimierung der Bauteileposition 1 und 2 derart, dass der Fügebereich 20 mit der Fokusierebene 13 zusammenfällt. Hierzu wird von der Regeleinrichtung 33 die Positioniereinrichtung 35 derart angesteuert, dass die von den Sensorelementen 29 erfassten Intensitätswerte jeweils ihr Maximum erreichen.

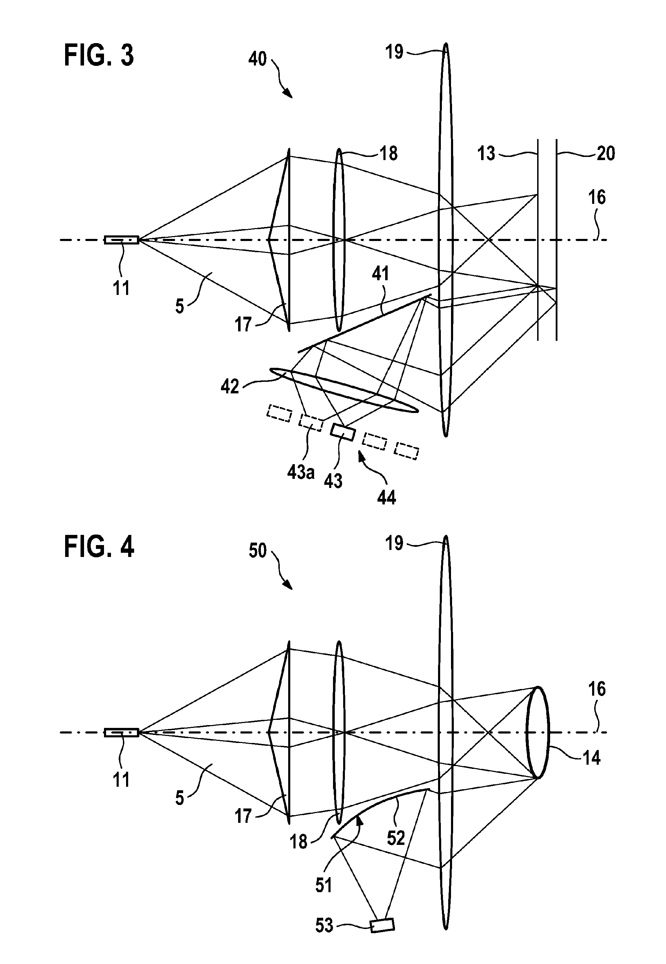

In der Fig. 3 ist eine zweite Laserstrahlschweißeinrichtung 40 dargestellt. Bei dieser Laserstrahlschweißeinrichtung 40 ist lediglich ein einziger Spiegel 41 vorgesehen, der mit einer einzigen Fokusierlinse 42 zusammenwirkt. Wesentlich dabei ist, dass auf der dem Spiegel 41 gegenüberliegenden Seite der Fokusierlinse 42 in der Fokusierebene der Fokusierlinse 42 eine Vielzahl von Sensorelementen 43 in Form eines Arrays 44 angeordnet sind. Hierbei wird sich die Überlegung zu Nutze gemacht, dass bei einer Ausrichtung des Fügebereichs 20 in der Fokusierebene 13 an demjenigen Sensorelement 43 ein Maximum der Intensität 1 der reflektierten Strahlung einstellt, welches sich in der Mitte der Fokusierlinse 42 befindet bzw. mit dieser ausgerichtet ist. Ist dagegen, wie in der Fig. 3 vereinfacht dargestellt, der Fügebereich 20 der Bauteile 1, 2 rechts beabstandet zur Fokusierebene 13, so wird mittels eines anderen Sensorelements 43a ein Maximum der Intensität I der reflektierten Strahlung ermittelt. Es lässt sich somit über eine Auswertung der Intensitätsverteilungen I der einzelnen Sensorelementen 43 des Arrays 44 auf die exakte Position der Bauteile 1 und 2 bzw. des Fügebereichs 20 rückschließen.

In der Fig. 4 ist eine nochmals modifizierte dritte Laserstrahlschweißeinrichtung 50 dargestellt. Die dritte Laserstrahlschweißeinrichtung 50 verzichtet bei der zusätzlichen Optikeinrichtung 51 auf eine Fokusierlinse 28, 42 wie bei den Laserstrahlschweißeinrichtungen 10 bzw. 40. Vielmehr findet ein konkav geformter Spiegel 52 Verwendung, der die reflektierte Strahlung direkt auf das entsprechende Sensorelement 53 richtet bzw. fokussiert.

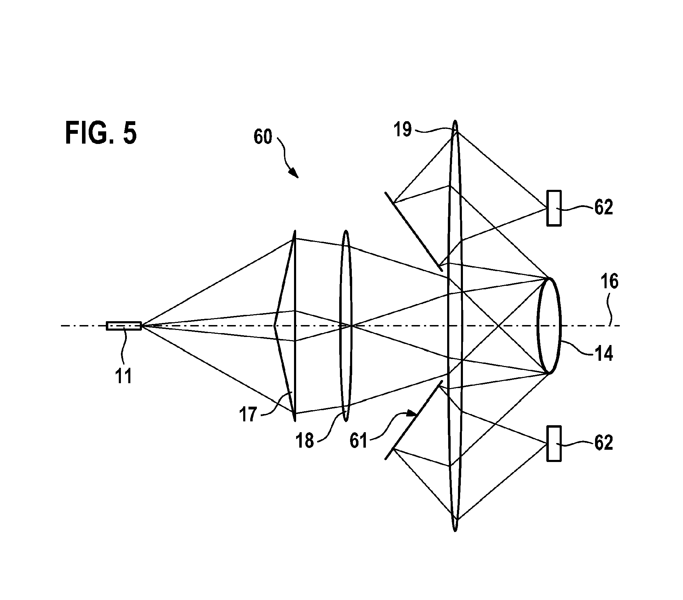

In der Fig. 5 ist eine vierte erfindungsgemäße Laserstrahlschweißeinrichtung 60 dargestellt. Hierbei wird ähnlich der Laserstrahlschweißeinrichtung 10 ein kegelförmiger Spiegel 61 verwendet, der die auf die Fokusierlinse 19 vom Fügebereich 20 reflektierte Strahlung wieder auf die Fokusierlinse 19 zurückwirft, wo sie entsprechend den Strahlungsgesetzen gebrochen wird. Auf der der Fokusierlinse 19 gegenüberliegenden Seite des Spiegels 61 sind wiederum eine Vielzahl von Sensorelementen 62 insbesondere in gleichmäßigen Winkelabständen zueinander angeordnet, um die aus den einzelnen Teilbereichen des Fügebereichs 20 reflektierte Strahlung auswerten zu können.

Ergänzend wird erwähnt, dass selbstverständlich auch die Laserstrahlschweißeinrichtungen 40, 50 und 60 entsprechend der Laserstrahlschweißeinrichtung 10 Auswerteeinrichtungen 25 und sämtliche andere Einrichtungen aufweisen, auch wenn dies in den Figuren nicht näher dargestellt ist.

Die soweit beschriebenen Laserstrahlschweißeinrichtungen 10, 40, 50 und 60 können in vielfältiger Art und Weise abgewandelt bzw. modifiziert werden, ohne vom Erfindungsgedanken abzuweichen. Dieser Erfindungsgedanke besteht darin, durch eine Auswertung der von dem Fügebereich 20 reflektierten Strahlung bzw. deren Intensität I auf eine Position der Bauteile 1 und 2 bzw. des Fügebereichs 20 zur Fokusierebene 13 zu schließen. Bevorzugt wird mittels der Auswertung eine Regelung der Bauteileposition vorgenommen, um den Laserstrahlschweißprozess zu optimieren bzw. diesen mit möglichst geringem Energieeintrag durchführen zu können, um Bauteilverzüge nach dem Erstarren der Fügezone 20 zu verhindern.

## Patentansprüche

1. Laserstrahlschweisseinrichtung (10; 40; 50; 60) zum Verbinden zweier Bauteile (1, 2), mit einer Laserstrahluelle (11) zur Erzeugung eines Laserstrahls (5), einer Optikeinrichtung (12) zur Formung eines ringförmigen Laserstrahls (14) in einer Fokusierebene (13) und einer Auswerteeinrichtung (25), die zumindest ein optisches Element (27; 41; 52; 61), insbesondere ein Spiegelelement, umfasst, mittels dem die von einer Fügezone (20) der Bauteile (1, 2) reflektierte Strahlung erfasst wird,
**dadurch gekennzeichnet,**
**dass** die Auswerteeinrichtung (25) die Position der Fügezone (20) relativ zur Fokussierebene (13) erfasst.

2. Laserstrahlschweisseinrichtung nach Anspruch 1,
**dadurch gekennzeichnet,**
**dass** die Auswerteeinrichtung (25) zumindest mittelbar mit einer Positioniereinrichtung (35) zur Positionierung der Bauteile (1, 2) relativ zur Fokusierebene (13) gekoppelt ist.

3. Laserstrahlschweisseinrichtung nach Anspruch 2,
**dadurch gekennzeichnet,**
**dass** die Positioniereinrichtung (35) zumindest eine Verstellung der Bauteile (1, 2) in Richtung einer Längsachse (16) des Laserstrahls (5) ermöglicht.

4. Laserstrahlschweisseinrichtung nach Anspruch 3,
**dadurch gekennzeichnet,**
**dass** die Positioniereinrichtung (35) zusätzlich eine Verstellung für die Bauteile (1, 2) in einer Ebene senkrecht zur Längsachse (16) des Laserstrahls (5) und zum Verkippen der Bauteile (1, 2) ermöglicht.

5. Laserstrahlschweisseinrichtung nach einem der Ansprüche 1 bis 4,
**dadurch gekennzeichnet,**
**dass** die Auswerteeinrichtung (25) wenigstens ein Sensorelement (29), insbesondere eine Photodiode, aufweist und, dass mittels des wenigstens einen Sensorelements (29) die Intensität (I) der von der Fügezone (20) der Bauteile (1, 2) reflektierten Strahlung erfasst wird.

6. Laserstrahlschweisseinrichtung nach Anspruch 5,
**dadurch gekennzeichnet,**
**dass** zusätzlich wenigstens eine Fokusierlinse (28; 42) vorgesehen ist, die die von dem optischen Element (27; 41) reflektierte Strahlung auf das wenigstens eine Sensorelement (29; 43) fokussiert.

7. Laserstrahlschweisseinrichtung nach Anspruch 6,
**dadurch gekennzeichnet,**
**dass** einer Fokusierlinse (42) mehrere Sensorelemente (43) zugeordnet sind, die nebeneinander in einer Ebene parallel zur Fokusierlinsenebene der Fokusierlinse (42) angeordnet sind.

8. Verfahren zum Betreiben einer Laserstrahlschweisseinrichtung (10; 40; 50; 60), bei dem mittels einer Laserstrahlquelle (11) ein Laserstrahl (5) und einer Optikeinrichtung (12) ein ringförmiger Laserstrahl (14) erzeugt wird, der auf eine Fügezone (20) zweier Bauteile (1, 2) geleitet wird, wobei im Strahlengang des Laserstrahls (5) eine zusätzliche Optikeinrichtung (26), insbesondere in Form wenigstens eines Spiegelelements (27; 41; 52; 61), angeordnet ist, das die von dem ringförmigen Laserstrahl (14) im Bereich der Fügezone (20) reflektierte Strahlung erfasst und einer Auswerteeinrichtung (25) zuführt,
**dadurch gekennzeichnet,**
**dass** die Auswerteeinrichtung (25) in Abhängigkeit der Höhe der Strahlungsintensität (I) eine Positionsbestimmung der Bauteile (1, 2) bzw. der Fügezone (20) relativ zu einer Fokusierebene (13) vornimmt.

9. Verfahren nach Anspruch 8,
**dadurch gekennzeichnet,**
**dass** zur Positionsbestimmung der Bauteile (1, 2) diese mittels einer Positioniereinrichtung (35) relativ zur Fokusierebene (13), insbesondere senkrecht zur Fokusierebene (13) bewegt werden und, dass während der Bewegung der Bauteile (1, 2) die Strahlungsintensität (I) mittels wenigstens eines Sensorelements (29; 43; 53; 62) erfasst wird.

10. Verfahren nach Anspruch 8 oder 9,
**dadurch gekennzeichnet,**
**dass** die Auswerteeinrichtung (25) mit einer Regeleinrichtung (33) gekoppelt ist, die eine Positioniereinrichtung (35) für die Bauteile (1, 2) derart ansteuert, dass die Fügezone (20) der Bauteile (1, 2) in der Fokusierebene (13) des ringförmigen Laserstrahls (14) angeordnet ist.
